# EUROPÄISCHE PATENTANMELDUNG

(11) **EP 2 422 915 A1**
(43) Veröffentlichungstag der Anmeldung: **29.02.2012**
(21) Anmeldenummer: 10767367.5
(22) Anmeldetag: 24.03.2010
(51) Int. Cl.: B23K 20/08, B23K 20/04, B32B 15/01

(54) **BIMETALLISCHER ROHLING UND VERFAHREN ZUR HERSTELLUNG EINER KASCHIERUNGSMETALLBAHN**

(30) Priorität: 21.04.2009 RU 2009114783; 16.09.2009 RU 2009135668
(71) Anmelder: Zakritoe Akcionernoe Obschestvo "Zavod Nestandartnogo Oborudovanjya", St.Petersburg 196653 (RU)
(72) Erfinder: BELOZEROV Oleg Anatolyevich, St.Petersburg 196655 (RU); KRAMER Andrey Aleksandrovich, St.Petersburg 196655 (RU); DUNAEV Vyacbeslav Vladimirovich, St.Petersburg 196653 (RU); SHUBIN Denis Aleksandrovich, St.Petersburg 193231 (RU)
(74) Vertreter: Jeck, Anton
(86) Internationale Anmeldenummer: PCT/RU2010/000149
(87) Internationale Veröffentlichungsnummer: WO 2010/123402

(57) **Zusammenfassung**

Die Erfindung betrifft ein Verfahren zur Herstellung von plattiertem Blech einschließlich der Vorbereitung der Kontaktflächen, der Zusammenfügung des Pakets aus wenigstens einer Lage des Grundmetalls und wenigstens einer Lage des Plattiermetalls, die Erhitzung des Pakets, die Verformung nach dem Warmwalz-Verfahren bis zu einer vorgegebenen Stärke des Plattierbleches. Damit die Qualität der Bimetallstoffe gesteigert und der Fertigungsvorgang optimiert werden kann, sieht die Erfindung vor, dass die Metalllagen vor der Erhitzung des Pakets und der Verformung gemäß dem Warmwalz-Verfahren zuerst mittels Sprengschweißens verschweißt werden.

## Beschreibung

Die Erfindung betrifft ein Verfahren zur Herstellung von plattiertem Blech und Bimetallplatine, hergestellt nach diesem Verfahren.

Die Erfindungen sind unter einer einheitlichen erfinderischen Idee vereinigt. Die Erfindungen beziehen sich auf die Herstellung von zwei- und mehrschichtigen Verbundblechen und -platten nach dem Warmwalzen-Verfahren mit unter-schiedlichen Ausführungen der Grund- und der Plattierlage, darunter Bimetallplatinen. Die Erfindungen können in der Metallurgie, im Maschinenbau, Kraftmaschinenbau, Erdöl- und Erdgasleitungsbau bei der Herstellung von großen Bimetallblechen oder Platten aus ungleichartigen Materialien verwendet werden.

Aus dem Stand der Technik sind unterschiedliche Verfahren zur Herstellung von Bimetallmaterialien und mehrschichtigen Metallwerkstücken bekannt, insbesondere Lichtbogenauftragsschweißen, Elektro-Schlackeschweißung, Sprengschweißen und Paketwalzen.

Aus dem Patent RU 2093329 (Verfahren zum Elektroschlackeauftragsschweißen und Einrichtung für seine Ausführung, veröffentlicht am 20.10.1997, IPC B23K25/00, B22D23/10, C22B9/18) ist ein Verfahren zur Herstellung von Bimetall mittels Elektroschlackeauftragsschweißens der Plattierlage bekannt. Das Verfahren umfasst die Erhitzung und die Zufuhr eines Auftragsschweißguts unter Pulver in einen Spalt zwischen einer wassergekühlten Kokille und einer Auftragsoberfläche. Dabei entsteht ein Zusatzmetallbad (die Schweiße). Es wird eine Erhitzung mittels Wirbelströme und eine nachfolgende Kühlung der aufgetragenen Schicht vorgenommen. Der Mangel dieses Verfahrens ist ein sehr hoher Arbeitsaufwand. Die weiteren Mängel sind eine unzureichend ebene Auftragsoberfläche, die ein zusätzliches Entgraten und Schleifen voraussetzt, und die Notwendigkeit, mehrere Schichten aufzutragen, um einen Vermischungseffekt des Auftragsmetalls durch das Grundmetall zu unterdrücken.

Aus dem Stand der Technik ist ein Verfahren zur Herstellung von Bimetall, vorwiegend Stahl - Kupfer, bekannt (Urheberschein 963762, Verfahren zur Bimetallherstellung, veröffentlicht am 07.10.1982, IK B23 K20/04). Dabei werden alle Bimetallbestandteile mittels Sprengschweißens verschweißt. Das Walzen von Bimetall erfolgt in den Walzen mit gleichem Durchmesser mit einer Stauchung von 25 - 30 % pro Walzgang. Dabei beträgt das Drehgeschwindigkeitsverhältnis der mit Kupferschicht in Kontakt stehenden Walze 0,90...0,95. Der Begriff Sprengschweißen (Explosionsschweißen) steht für die Verbindung von Metallplatten bei ihrem Aufprall gegeneinander infolge ihrer Verwerfung mit Detonationsprodukten des Sprengstoffs. Die Mängel des Verfahrens sind eine eingeschränkten Funktionalität bei der Anwendung von ungleichartigen Metallen und eine niedrige Verbindungsfestigkeit der Lagen. Darüber hinaus werden die infolge des Sprengschweißens entstehende unzureichend hohe Genauigkeit und die Bimetallebenheit bei nachfolgendem Walzen mit einer fehlangepassten Walzengeschwindigkeit nicht vollständig beseitigt.

Ein anderes bekanntes Verfahren zur Herstellung von plattiertem Blech umfasst ein Zusammenfügen des Pakets aus den Lagen des Grund- und des Plattiermetalls mit verfahrenstechnischer Zugabe für die Breite und die Länge der Grundlage, das Schweißen des Grund- und des Plattiermetalls mit der dichten luftleeren Schweißnaht am Umfang, Evakuieren des Pakets, Erhitzung des Pakets, Verformung nach dem Warmwalz-Verfahren in einigen Walzgängen (Patent RU 2103130, Verfahren zur Herstellung von plattiertem Blech, veröffentlicht am 27.01.1998, IPC B 23 K 20/04). Der Mangel dieses Verfahrens ist ein hoher Arbeits- und Materialaufwand, welcher durch die vorhandenen verfahrenstechnischen Zugaben bedingt ist. Außerdem ist dieses Verfahren durch eine ungenügend feste Bindung der Lagen gekennzeichnet. Darüber hinaus kann dieses Verfahren nicht für Mehrschichtplatinen aus schwer verschweißbaren Werkstoffen angewendet werden.

Ein anderes bekanntes Verfahren zur Bimetallherstellung wurde als Prototyp gewählt. Es umfasst die Vorbereitung der Kontaktflächen, die Zusammenfügung des Pakets aus Grund- und Plattiermetalllagen, die Erhitzung und die Verformung nach dem Warmwalz-Verfahren bis zur vorgegebenen Stärke des Plattierbleches. Das Paket wird zusammengefügt, indem seine Komponenten mittels Lichtbogenschweißens festgehalten werden. Das Walzen des Pakets wird in einigen Walzgängen vorgenommen. Das Verfahren wird zur Fertigung von Verbundstoff und vorwiegend Bimetallblechen benutzt (Urheberschein 937117, Verfahren zur Bimetallherstellung, veröffentlicht am 23.06.1982, IK 23B 20/04). Die Mängel dieses Verfahrens sind: eine unzureichende Lagenbindungsfestigkeit, welche ein lokales Ablösen der Plattierlage beim Walzen verursacht; die Notwendigkeit eines großen Verformungsverhältnisses, um die Lagen miteinander zu binden; ein hoher Arbeitsaufwand des Vorgangs; die Unmöglichkeit, Mehrschichtplatinen aus schwer verschweißbaren Metallen herzustellen.

Aus dem Stand der Technik ist ein Bimetallpaket bekannt, welches aus einer Grundlageplatine und aus einem oberen und einem unteren Plattierlageblech besteht. Diese Lagen werden so zusammengefügt, dass dank den Unterschieden zwischen Platine und Blechen in Länge und Breite Flansche für das Schweißen gebildet werden. Die Bleche sind am Umfang mittels Schweißnähte verbunden (Patent RU 2234400, Bimetallpaket und Verfahren für seine Herstellung, veröffentlicht am 20.08.2004, IPC B23K20/04). Dieses bekannte Bimetallpaket ist durch eine erhöhte Metallaufwandsrate gekennzeichnet, denn die Kanten des warm gewalzten Bleches müssen verschnitten werden. Außerdem sind die Lagen nicht fest genug miteinander verbunden.

Aus dem Stand der Technik ist eine Platine für Bimetallbänder bekannt. Sie besteht aus zwei Bändern ungleichartiger Metalle. Die Kontaktfläche eines der Bänder ist mit Längsriffelungen ausgebildet (Kleinpatent RU 1252, Werkstück für Bimetallbänder>>, veröffentlicht am 16.12.1995, IPC B23K 20/04). Der Mangel dieses Werkstücks ist eine ungenügende Lagenverbindungsfestigkeit.

Aus dem Stand der Technik ist ein Bimetall bekannt, welches aus zwei Metallen mit verschiedener Härte besteht. Diese Metalle stehen im mechanischen Kontakt über ihre Oberflächen, welche aus sich abwechselnden Vorsprüngen des Weich- und Hartmetalls bestehen. Diese Vorsprünge sind im Querschnitt als Schwalbenschwanz ausgebildet. An den Spitzen dieser Vorsprünge sind diese Metalle miteinander verschweißt (Patent RU 2315697, Hochfestes Bimetall und Verfahren für seine Herstellung, veröffentlicht am 27.01.2008, IPC B32B 15/01, B23K 20/08). Die Mängel dieses Bimetalls sind der Arbeitsaufwand bei der Fertigung und die begrenzten Möglichkeiten bei der Herstellung von Mehrschichtplatinen, welche in Bezug auf die Festigkeit aus vergleichbaren Materialen bestehen.

Aus dem Stand der Technik ist ein Bimetallmaterial bekannt, welches der Gesamtheit der wesentlichen Merkmale nach der vorgeschlagenen Erfindung am nächsten liegt und als Prototyp gewählt ist. Es enthält eine Lage eines Grundmetalls, eine Plattiermetalllage und eine Diffusions-Zwischenschicht zwischen beiden. Die Diffusionsschicht ist mittels Warmwalzens der Platine mit nachfolgender Wärmebehandlung gebildet. Als Grundmetall wird Stahl benutzt. Der Stahl enthält eine Gruppe von Legierungselementen, einschließlich Silizium und Aluminium. Als Plattiermetall wird nichtrostender Stahl mit einer Gruppe von Legierungselementen benutzt (Patent RU 2206631, Walzprofile aus plattiertem Stahl zur Betonarmierung und Verfahren für ihre Herstellung, veröffentlicht am 20.06.2003, IPC C22C38/00, B32B15/18, B23K20/04). Die Mängel dieses bekannten Verbundstoffs sind eine ungenügende Lagenbindungsfestigkeit, welche ein lokales Ablösen der Plattierlage beim Walzen und eine Biegung von großen Plattierplatinen bei ihrem Transport verursacht, und die Unmöglichkeit der Herstellung von Mehrschichtplatinen aus schwer verschweißbaren Metallen.

Es ist Aufgabe der Erfindung, ein Verfahren zur Herstellung von plattiertem Blech zu entwickeln, das die Qualität der Bimetallstoffe und der mehrschichtigen Metallwerkstücke steigert und den Fertigungsvorgang optimiert.

Die gestellte Aufgabe wird durch die Merkmale des Anspruchs 1 gelöst.

Das Verfahren zur Herstellung von plattiertem Blech umfasst folgende Verfahrensschritte: Vorbereitung der Kontaktflächen; Zusammenfügung des Pakets aus wenigstens einer Lage des Grundmetalls und wenigstens einer Lage des Plattiermetalls; Erhitzung des Pakets; Verformung nach dem Warmwalz-Verfahren bis zu einer vorgegebenen Stärke des Plattierbleches.

Dabei werden erfindungsgemäß die Metalllagen vor der Erhitzung des Pakets und der Verformung gemäß Warmwalz-Verfahren zuerst mittels Sprengschweißens verschweißt.

Die durch die Ausführung des angemeldeten Verfahrens erreichbaren technischen Ergebnisse sind:
- eine Erhöhung der Lagenbindungsfestigkeit;
- eine Verminderung des Einflusses des Verformungsverhältnisses und der Verformungszustände der Platine in Bezug auf das Endblech auf die Qualität der Lagenbindung;
- eine Ermöglichung der Fertigung von Mehrschichtplatinen aus unterschiedlichen Metallen, darunter auch aus schwer verschweißbaren Metallen.

Die durch einzelne Ausgestaltungen erreichbaren technischen Ergebnisse des Verfahrens zur Herstellung von plattiertem Blech beinhalten:
- eine Verminderung des Einflusses der Rutschkraft auf die Plattierlage sofort nach dem Ergreifen durch die Walzen;
- eine Entfernung und/oder Sperrung von Spannungskonzentratoren, welche durch mangelhaftes Durchschweißen über die kantennahe Anschlusslinie gebildet werden;
- eine Reduzierung der Nachwalzreparatur von Bimetallblechen und -platten.

Die Vorbereitung der Kontaktflächen erfolgt vorzugsweise mittels eines Entgratens bis zur blanken Oberfläche.

Es ist ebenfalls bevorzugt vorgesehen, dass nach dem Sprengschweißen die Kontinuitätsprüfung der Lagenbindung über die gesamte Fläche und die Anschlusskante mit nachfolgender Reparatur mittels Folgeprüfung und Einschweißens der Fehlerstellen vorgenommen wird.

Nach einer weiteren Ausgestaltung ist vorgesehen, dass nach dem Sprengschweißen wenigstens eine Kante der Plattierlage mit eventueller Eindringung in die Grundlage abgefast wird, und zwar bevorzugt mit einem Winkel α ≤ 60°.

Gemäß einzelnen Ausgestaltungen der Erfindung kann die Bindungslinie nach dem Sprengschweißen und vor der Erhitzung und dem Walzen des Pakets über die gesamte Kontur der Bindung der Grundmetall- und der Plattierlage oder nur stellenweise mittels Schweißens verstärkt werden.

Gemäß einzelnen Ausgestaltungen der Erfindung kann ein Teil der Plattierlage um die mit Fehlern oder zu niedriger Bindung betroffene Breite nach dem Sprengschweißen, vor der Erhitzung und dem Walzen des Pakets, über die gesamte Kontur oder nur stellenweise entfernt werden.

Die Vergleichsanalyse des angemeldeten Verfahrens zur Herstellung von plattiertem Blech mit dem Prototyp hat ergeben, dass sich dieses Verfahren in allen Ausgestaltungen von der bekannten und am nächsten liegenden technischen Lösung durch folgende Merkmale unterscheidet:
- Die Lagen werden vor der Erhitzung des Pakets und der Verformung nach dem Warmwalz-Verfahren mittels Sprengung verschweißt;
- Das Sprengschweißen erfolgt mit einer relativen Formänderung des Pakets um 1,3 - 12 % und unter der relativen Formänderung des Pakets wird das Verhältnis der Paketkompression nach dem Sprengschweißen zur Pakethöhe vor dem Sprengschweißen verstanden.

Gemäß weiterer Ausgestaltungen der Erfindung unterscheidet sich die angemeldete Erfindung von der bekannten am nächsten liegenden technischen Lösung durch folgende Merkmale:
- Entgraten der Kontaktflächen bis zur blanken Oberfläche (Metallglanz);
- Kontinuitätsprüfung der Lagenbindung über die gesamte Fläche und über die Anschlusskante mit einer nachfolgenden Reparatur mittels Folgeprüfung und Einschweißens der Fehlerstellen;
- Abfasen von einer der Kanten der Plattierlage der Fase mit eventueller Eindringung in die Grundlage, vorzugsweise mit einem Winkel α ≤ 60°;
- Verstärkung der Bindungslinie über die gesamte Kontur der Bindung der Grundmetall- und der Plattierlage oder nur stellenweise mittels Schweißens nach dem Sprengschweißen, vor der Erhitzung und dem Walzen des Pakets;
- Entfernung von einem Teil der Plattierlage um die mit Fehlern oder zu niedriger Bindung betroffene Breite über die gesamte Kontur oder nur stellenweise nach dem Sprengschweißen, vor der Erhitzung und dem Walzen des Pakets.

Die Ausführung von Verfahrensschritten, darunter die Vorbereitung der Kontaktflächen, die Zusammenfügung des Pakets, welches wenigstens eine Lage von Grundmetall und eine Plattiermetalllage enthält; das Sprengschweißen der Lagen erfolgt mit einer relativen Formänderung des Pakets um 1,3 bis 12 %; Die Erhitzung des Pakets und die Verformung nach dem Warmwalz-Verfahren ermöglichen es, den hergestellten Zwei- oder Mehrschicht-Bimetallstoffen neue Eigenschaften zu verleihen. Diese Eigenschaften stellen eine hohe Lagenbindungsfestigkeit auch bei schwer verschweißbaren Werkstoffen sicher. Das Sprengschweißen der Lagen stellt ein vorausgehendes Diffusionsschweißen über die gesamte Verbundfläche sicher. Danach folgen die Erhitzung des Pakets und das Warmwalzen. Diese Schritte ermöglichen es, im Endeffekt eine über alle Querschnitte einheitliche Platine zu bekommen. Diese weist alle Eigenschaften eines konventionellen Gussrohlings für das Walzen auf, z. B. die einer Bramme. Der Verbrauchsfaktor der nach dem angemeldeten Verfahren hergestellten Platine beträgt 1,15 - 1,3 und ist mit dem Verbrauchsfaktor des gewöhnlichen Gussrohlings vergleichbar, denn die verfahrenstechnischen Zugaben für die Seitenkante und die Länge beim aus dem Paket gemäß dem angemeldeten Verfahren hergestellten Plattierblech und die Zugaben beim aus der Bramme hergestellten homogenen Blech sind identisch.

Das angemeldete Verfahren ermöglicht die Herstellung von sowohl zwei- als auch mehrschichtigen Verbindungen unterschiedlicher Metalle unter Großfertigungsbedingungen. Dabei wird eine hohe Festigkeit der Lagenbindung beim Walzen mit geringem Formänderungsverhältnis der Ausgangsplatine gegenüber dem Endprodukt erreicht. Bei der Anwendung des angemeldeten Verfahrens üben das Formänderungsverhältnis der Platine gegenüber dem Endblech sowie die Formänderungszustände und die Kritizität gegenüber dem Erhitzungsverlauf für das Walzgut einen geringen Einfluss auf die Qualität der Lagenbindung beim gewalzten Bimetall- oder Mehrschichtblech auf das Paket aus. Die Möglichkeit einer gerätetechnischen Kontrolle der erforderlichen relevanten Qualitätskenndaten des sprengverschweißten Pakets, welche die Brauchbarkeit der produzierten Verbundbleche beeinflussen, vor den teueren Erhitzungs- und Walzvorgängen und die Möglichkeit der Nachbesserung der Kontinuitätsfehler erlauben, das Fertigungsverfahren zu optimieren und die Energiekosten und den Arbeitsaufwand zu senken.

Das Abfasen von wenigstens einer der Kanten der Plattierlage vorzugsweise mit einem Winkel α ≤ 60° nach dem Sprengschweißen der Lagen mit einer eventuellen Eindringung in die Grundlage ermöglicht es, den Einfluss der Rutschkraftwirkung sofort nach dem Einzug durch die Walzen zu verringern. Somit wird ein Ablösen (Abreißen) der Plattierlage beim Walzen während der ersten Stauchungsgänge verhindert. Die Ausschussrate bei der Produktion nimmt ebenfalls ab.

Die Verstärkung der Bindungslinie mittels Schweißens entlang der Bindungskontur der Grundmetall- und der Plattierlage sowie die Entfernung von einem Teil der Plattierlage entlang der Bindungskontur, um eine fehlerhafte oder eine niedrige Bindungsfestigkeit aufweisende Breite auszuschalten, sorgen für die Sperrung oder Entfernung von Spannungskonzentratoren. Die Spannungskonzentratoren entstehen infolge eines mangelhaften Durchschweißens über die kantennahe Anschlusslinie. Das geschieht bei der Erhitzung der Platine wegen unterschiedlicher Wärmedehnzahlen des Grundmetalls und der Plattierlage.

Das angemeldete Verfahren ermöglicht die Herstellung von hochwertigen plattierten Zwei- oder Mehrschichtblechen und -platten, darunter auch von Verbundblechen und -platten aus schwer verschweißbaren Metallen mit längeren Vorwalzlagerungszeiten, ohne Einschränkungen in Bezug auf die Transportbedingungen.

Die durch die angemeldete Bimetallplatine zu lösenden Aufgaben sind eine Qualitätserhöhung der Bimetallplatinen und eine Erweiterung des Sortiments der produzierten Erzeugnisse.

Die durch alle Ausgestaltungen der angemeldeten Lösung erreichten technischen Ergebnisse schließen Folgendes ein: eine Erhöhung der Lagenbindungsfestigkeit und eine Verminderung des Einflusses des Verformungsverhältnisses und der Verformungszustände der Platine gegenüber dem Endblech auf die Qualität der Lagenbindung.

Das gemäß einer einzelnen Ausgestaltung der angemeldeten Lösung erreichte technische Ergebnis besteht in einer Verminderung des Einflusses der Rutschkraft auf die Plattierlage sofort nach ihrem Einzug durch die Walzen.

Das genannte technische Ergebnis wird folgenderweise erreicht:
Die Bimetallplatine weist wenigstens eine Lage eines Grundmetalls, wenigstens eine Plattiermetalllage und eine Diffusions-Zwischenschicht zwischen beiden auf. Die Diffusionsschicht entsteht beim Sprengschweißen der Lagen des Grundmetalls und des Plattiermetalls beim nachfolgenden Warmwalzen der Platine.

Eine der Kanten der Plattierlage ist vorzugsweise mit einer Fase versehen. Die Fase ist mit einer eventuellen Eindringung in die Grundmetalllage ausgebildet.

Die Fase einer der Kanten der Plattiermetalllage ist mit einem Winkel α ≤ 60° ausgebildet.

Gemäß einer weiteren Ausgestaltung der Erfindung ist die Bimetallplatine mit einer Schweißnaht versehen, welche entlang der gesamten Kontur der Lagenbindung von Grund- und Plattiermetall oder nur stellenweise verschweißt ist.

Die Vergleichsanalyse der angemeldeten Bimetallplatine und des Prototyps hat gezeigt, dass sich die Bimetallplatine in allen Ausgestaltungen von der bekannten am nächsten liegenden technischen Lösung durch folgende Merkmale unterscheidet: Die Diffusions-Zwischenschicht ist mittels Sprengschweißens der Lagen von Grundmetall und Plattiermetall ausgebildet. Dabei geht dieses Sprengschweißen dem Warmwalzen der Platine immer voraus.

Gemäß einer weiteren Ausgestaltung der Erfindung unterscheidet sich die angemeldete Bimetallplatine von der bekannten am nächsten liegenden technischen Lösung durch folgende Merkmale:
- das Vorhandensein einer Fase an einer der Kanten der Plattiermetalllage, wobei die Fase mit einer eventuellen Eindringung in die Grundlage ausgebildet ist;
- die Abfasung einer der Kanten der Plattiermetalllage mit einem Winkel α ≤ 60°;
- das Vorhandensein einer Schweißnaht. Die Schweißnaht ist ganzflächig oder über die Kontur der Lagenbindung des Grundmetalls und des Plattiermetalls oder nur stellenweise ausgeführt.

Zwischen den Lagen des Grundmetalls und des Plattiermetalls gibt es eine Diffusionszwischenschicht. Diese entsteht infolge des Sprengschweißens der Lagen mit nachfolgendem Warmwalzen der Platine. Das Vorhandensein dieser Diffusionszwischenschicht sorgt dafür, dass die hergestellte Bimetallplatine neue Eigenschaften bekommt. Diese Eigenschaften stellen eine hohe Lagenbindungsfestigkeit auch bei schwer verschweißbaren Werkstoffen sicher.

Die angemeldete Bimetallplatine ist "monolithisch" in allen Querschnitten und weist die Eigenschaften eines üblichen Gussrohlings auf, welcher für das Walzen normalerweise benutzt wird, z. B. einer Bramme. Dieser Platine ist ein nur geringer Einfluss des Verformungsverhältnisses, der Verformungszustände der Platine gegenüber dem Endblech sowie der Kritizität gegenüber dem Erhitzungsverlauf des Walzguts auf die Qualität der Lagenbindung eigen. Dies ermöglicht, das Sortiment der hergestellten Produkte dank der Fertigung von größeren Bimetallstärken aus Großrohlingen, einschließlich Brammen, zu erweitern.

Der Verbrauchsfaktor bei der Herstellung der Platine beträgt 1,2 - 1,3 und überschreitet den Verbrauchsfaktor des üblichen Gussrohlings (der Bramme) nicht, weil es keine zusätzlichen verfahrenstechnischen Zugaben für die Seitenkante und die Länge gibt. Die Möglichkeit einer gerätetechnischen Kontrolle der erforderlichen relevanten Qualitätskenndaten des sprengverschweißten Pakets noch vor den teueren Erhitzungs- und Walzvorgängen mit eventueller Nachbesserung der Kontinuitätsfehler erlauben es, das Platinenfertigungsverfahren zu optimieren und die Selbstkosten zu senken.

Das Vorhandensein einer Schweißnaht über die gesamte Kontur der Lagenbindung des Grundmetalls und des Plattiermetalls oder nur stellenweise sorgt für die Sperrung von Spannungskonzentratoren, welche durch ein mangelhaftes Durchschweißen über die kantennahe Anschlusslinie bedingt sind. Diese Spannungskonzentratoren entstehen bei der Erhitzung der Platine auf Grund von unterschiedlichen Wärmedehnzahlen des Grundmetalls und der Plattierlage.

Die Abfasung einer der Kanten der Plattierlage, vorzugsweise mit einem Winkel α ≤ 60°, mit einer eventuellen Eindringung in die Grundmetalllage ermöglicht es, den Einfluss der Rutschkraft auf die Plattierlage sofort nach dem Ergreifen durch die Walzen zu vermindern. Somit ist das Abreißen der Plattierlage beim Walzen während der ersten Stauchungsgänge vermieden. Im Endeffekt ist dadurch die Ausbeute des Fertigprodukts vergrößert.

Die angemeldete Bimetallplatine ist durch eine hohe Güte und längere Lagerungszeiten gekennzeichnet und hat keine Einschränkungen in Bezug auf die Transportbedingungen.

Ein Ausführungsbeispiel der Erfindung ist in der Zeichnung schematisch dargestellt. Es zeigt:

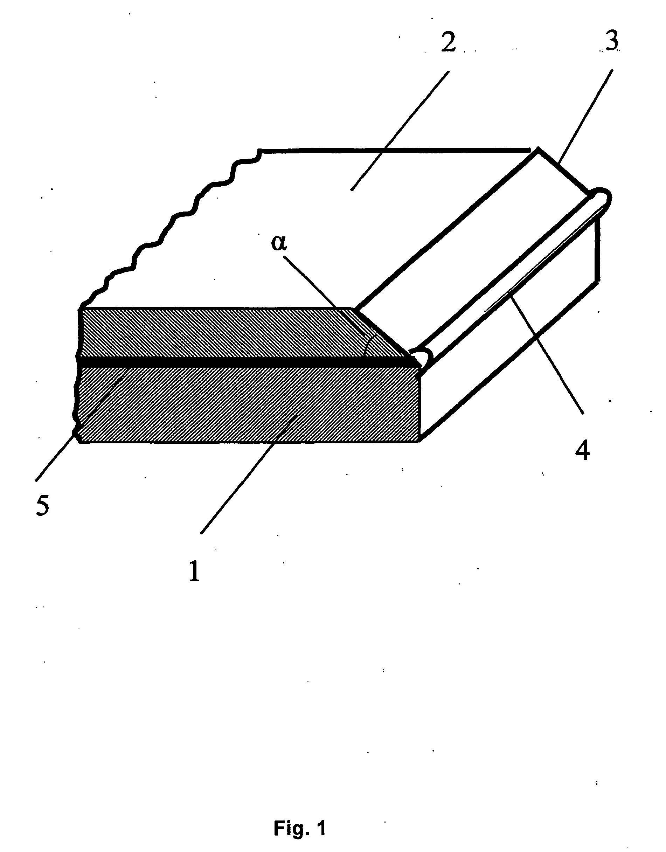

- Fig. 1: eine nach dem Verfahren der Erfindung hergestellte Bimetallplatine in per- spektivischer Ansicht.

Als Ausgangsplatine für die Grundlage 1 = Grundmetall werden Guss- und geschmiedete Rohlinge - Brammen, Gussblech oder Rohwalzgut aus Kohlenstoffstahl und/oder niedrig legiertem und/oder legiertem Stahl benutzt. Für die Plattierlage 2 wird Rohwalzgut aus nichtrostendem, warmfestem Stahl sowie aus Titan-, Kupfer- oder anderen Legierungen benutzt. Die Kontaktflächen des Grundmetalls 1 und der Plattierlage 2 werden anhand einer mechanischen Behandlung vorzugsweise bis zur blanken Oberfläche (Metallglanz) vorbereitet. Nach der Vorbereitung der Kontaktflächen erfolgt eine Zusammenfügung des Pakets ohne verfahrenstechnische Zugaben in der Breite und der Länge der Grundlage 1. Danach wird das Sprengschweißen der Lagen durchgeführt. Dabei wird das Bimetallrohwalzgut für das nachfolgende Walzen produziert. Danach erfolgen die Erhitzung und das Warmwalzen. Um das Ablösen der Plattierlage zu vermeiden und den Einfluss der Rutschkraft sofort nach dem Einzug der Platine in die Walzen zu vermindern, wird mindestens eine der Kanten der Plattierlage 2 mit einer Fase 3 mit einem Winkel α ≤ 60° mit einer eventuellen Eindringung in die Grundlage 1 versehen. Das Sprengschweißen erfolgt mit relativer Formänderung des Pakets um 1,3 - 12 %. Dabei wird unter relativer Formänderung des Pakets das Verhältnis der Paketkompression nach dem Sprengschweißen zur Pakethöhe vor dem Sprengschweißen verstanden. Das hergestellte Rohwalzgut wird einer Sichtprüfung und/oder einer gerätetechnischen Werkstoffprüfung (US-Prüfung, Metallographie) ausgesetzt, um die Kontinuität und die Qualität der Lagenbindung über die gesamte Fläche und entlang der Anschlusskante zu prüfen. Gegebenenfalls wird eine Nachbesserung mittels Folgeprüfung mit nachfolgendem Schweißen der fehlerhaften Stellen vorgenommen. Gegebenenfalls wird die Bindungslinie entlang der gesamten Kontur der Bindung der Grundmetalllage 1 und der Plattierlage 2 oder nur stellenweise mittels Schweißens verstärkt, so dass eine Schweißnaht 4 gebildet wird. Ein Teil der Plattierlage 2, je nach der Breite der fehlerhaften oder eine niedrige Bindungsfestigkeit aufweisenden Stelle, wird entfernt. Das zusammengefügte Paket wird bis zu einer Walzenanfangstemperatur von 1150 - 1300° C erwärmt und auf die erforderlichen Abmessungen gewalzt. Beispiele und Angaben über die Qualitätskenndaten der Verbundbleche nach dem angemeldeten Verfahren sind der Tabelle 1 zu entnehmen.

Die Bimetallplatine weist wenigstens eine Lage von Grundmetall 1 und wenigstens eine Plattiermetalllage 2 auf. Dazwischen liegt eine Diffusions-Zwischenschicht 5.

Die Diffusionsschicht 5 ist mittels Sprengschweißens der Lagen von Grundmetall 1 und Plattiermetall 2 mit nachfolgendem Warmwalzen der Platine ausgebildet. Eine der Kanten der Plattiermetalllage 2 sollte vorzugsweise mit einer Fase 3 versehen werden. Die Fase 3 sollte mit einer eventuellen Eindringung in die Grundmetalllage 1 ausgebildet werden. Die Fase 3 sollte vorzugsweise einen Winkel α ≤ 60° aufweisen.

Gemäß weiteren Ausgestaltungen der Erfindung kann eine mehrschichtige Metallplatine eine Schweißnaht 4 aufweisen. Die Schweißnaht 4 wird ganzflächig oder entlang der Kontur der Lagenbindung von Grundmetall 1 und Plattiermetall 2 oder nur stellenweise ausgeführt.

Die Bimetallplatine kann folgenderweise hergestellt werden. Als Ausgangsplatine für die Grundmetalllage 1 werden Guss- und geschmiedete Rohlinge - Brammen, Gussbleche oder Rohwalzgut aus Kohlenstoffstahl und/oder niedrig legiertem und/oder legiertem Stahl benutzt. Für die Plattierlage 2 wird Rohwalzgut aus nichtrostendem, warmfestem Stahl sowie aus Titan-, Kupfer- oder anderen Legierungen benutzt. Die Kontaktflächen der Grundmetalllage 1 und der Plattierlage 2 werden z. B. anhand der mechanischen Behandlung vorzugsweise bis zur blanken Oberfläche vorbereitet. Danach wird das Paket ohne verfahrenstechnische Zugaben für die Breite und die Länge der Grundlage zusammengefügt. Danach werden die Lagen nach dem Sprengschweiß-Verfahren verschweißt. Somit wird das Bimetall-Rohwalzgut für das nachfolgende Walzen hergestellt. Das hergestellte Rohwalzgut kann einer Sichtprüfung und/oder gerätetechnischen Prüfung ausgesetzt werden, um die Kontinuität der Lagen über die gesamte Fläche und über die Anschlusskante zu prüfen. Gegebenenfalls wird eine Nachbesserung mittels einer Folgeprüfung mit nachfolgendem Schweißen der fehlerhaften Stellen vorgenommen. Falls erforderlich, wird die Bindungslinie ganzflächig oder über die gesamte Kontur der Bindung der Grundmetall- und der Plattierlage oder nur stellenweise mittels Schweißens verstärkt. Dabei wird ein Teil der Plattierlage 2 und zwar um die fehlerhafte oder niedrige Bindungsfestigkeit aufweisende Breite entfernt. Um das Ablösen der Plattierlage 2 zu vermeiden und den Einfluss der Rutschkraft auf die Plattierlage sofort nach dem Einzug in die Walzen zu verringern, wird wenigstens eine Kante der Plattierlage 2 abgefast. Das zusammengefügte Paket wird bis zu einer Anfangstemperatur des Walzvorgangs von 1150 - 1300° C erwärmt und gewalzt. Das Walzen wird abgeschlossen, sobald die vorgegebenen Abmessungen des Endrohlings bzw. des Endbleches erreicht sind.

Das angemeldete Verfahren zur Herstellung von plattiertem Blech und der Bimetallplatine kann im Walzbetrieb gewerblich angewendet und in der Metallurgie, im Maschinenbau, im Kraftmaschinenbau und im Erdöl- und Gasbereich benutzt werden.

| Ausgangsstärken der Platinen für die Zusammenfügung der Pakete, **mm** (Grundlage - Stahl 12XM, Plattierlage - Stahl 08X13) | Paketstärke für das Walzen nach dem Sprengschweißen, **mm** | Relative Formänderung nach dem Sprengschweißen, % (Hinweis) | Formänderungsverhältnis nach dem Warmwalz-Verfahren (Paket / Blech) | Endblech: Ergebnis der Ultraschallprüfung nach dem Walzen gem. GOST 22727-88: Empfindlichkeit bei der US-Prüfung D5E. | Endbech-Abscherfestigkeit, MPa nach dem Walzen, gemäß GOST 10885-85 | Endblech - Biegeprüfung nach GOST 10885 -85 |
|---|---|---|---|---|---|---|
| Grundlage - 129,4 + Plattierlage - 12,3 (**Σ = 141,7 mm**) | **140,4** | **0,9** (Kontinuität der Bindung ∼30% der Oberfläche) | - | - | - | - |
| Grundlage - 129,4 + Plattierlage - 12,3 (**Σ** = **141,7 mm**) | **139,9** | **1,3** (Kontinuität der Bindung ∼96% der Gesamtoberfläche - Inkontinuität der kantennahen Bereiche) | **2,54** (Nennstärke des hergestellten Bleches **55 mm**) | Keine Anzeigen der Inkontinuitäten, inkl. punktartiger Inkontinuitäten innerhalb der vollkantigen Bleche. Randinkontinuität innerhalb von 4 %. | **313** | Keine Prüfmusterdefekte |
| Grundlage - 137,3 + Plattierlage - 10,1 x 3 Stck. (**Σ=167,7 mm**) | **147,8** | **11,8** (Kontinuität der Bindung ∼ 98% der Gesamtoberfläche - Inkontinuität der kantennahen Bereiche) | **4,11** (Nennstärke des hergestellten Bleches **36 mm**) | Keine Anzeigen der Inkontinuitäten, inkl. punktartiger lnkontinuitäten innerhalb der vollkantigen Bleche. Randinkontinuität innerhalb von 2 %. | **370** | Keine Prüfmusterdefekte |
| Grundlage - 129,4 + Plattierlage - 10,1 x 2 Stck. (**Σ = 149,6 mm**) | **129,1** | **13,7** (Bindungszerstörung während der Erhitzung) | - | - | - | - |

## Patentansprüche

1. Verfahren zur Herstellung von plattiertem Blech, einschließlich der Vorbereitung der Kontaktflächen, der Zusammenfügung des Pakets aus wenigstens einer Lage des Grundmetalls (1) und wenigstens einer Lage des Plattiermetalls (2), die Erhitzung des Pakets, die Verformung nach dem Warmwalz-Verfahren bis zu einer vorgegebenen Stärke des Plattierbleches,
**dadurch gekennzeichnet,**
**dass** die Metalllagen (1, 2) vor der Erhitzung des Pakets und der Verformung gemäß dem Warmwalz-Verfahren zuerst mittels Sprengschweißens verschweißt werden; wobei das Sprengschweißen mit einer relativen Formänderung des Pakets um 1,3 - 12 % erfolgt und unter der relativen Formänderung des Pakets das Verhältnis der Paketkompression nach dem Sprengschweißen zur Pakethöhe vor dem Sprengschweißen verstanden wird.

2. Verfahren nach Anspruch 1,
**dadurch gekennzeichnet,**
**dass** die Vorbereitung der Kontaktflächen mittels Entgratens bis zu einer blanken Oberfläche (Metallglanz) erfolgt.

3. Verfahren nach Anspruch 1,
**dadurch gekennzeichnet,**
**dass** nach dem Sprengschweißen eine Kontinuitätsprüfung der Lagenbindung über die gesamte Fläche und über die Anschlusskante mit einer nachfolgenden Nachbesserung mittels Folgeprüfung und Einschweißens der fehlerhaften Stellen vorgenommen wird.

4. Verfahren nach Anspruch 1,
**dadurch gekennzeichnet,**
**dass** wenigstens eine der Kanten der Plattierlage (2) nach dem Sprengschweißen abgefast wird, und zwar mit einer eventuellen Eindringung in die Grundlage (1).

5. Verfahren nach Anspruch 4,
**dadurch gekennzeichnet,**
**dass** eine der Kanten der Plattierlage (2) mit einem Winkel α ≤ 60° abgefast wird.

6. Verfahren nach Anspruch 1,
**dadurch gekennzeichnet,**
**dass** die Bindungslinie nach dem Sprengschweißen und vor der Erhitzung und dem Walzen des Pakets über die gesamte Kontur der Bindung der Grundmetall- (1) und der Plattierlage (2) oder nur stellenweise mittels Schweißens verstärkt wird.

7. Verfahren nach Anspruch 1,
**dadurch gekennzeichnet,**
**dass** ein Teil der Plattierlage, und zwar um die fehlerhafte oder niedrige Bindungsfestigkeit aufweisende Breite, nach dem Sprengschweißen und vor der Erhitzung und dem Walzen des Pakets über die gesamte Kontur oder nur stellenweise entfernt wird.

8. Verfahren nach beliebigen der Ansprüche 1 - 7,
**dadurch gekennzeichnet,**
**dass** das Sprengschweißen mit relativer Formänderung des Pakets um 1,3 - 12 % durchgeführt wird. Unter der relativen Formänderung des Pakets wird das Verhältnis der Paketkompression nach dem Sprengschweißen zur Pakethöhe vor dem Sprengschweißen verstanden.

9. Bimetallplatine mit wenigstens einer Lage von Grundmetall, wenigstens einer Plattiermetalllage und einer Diffusions-Zwischenschicht dazwischen, wobei die Diffusions-Zwischenschicht mittels Warmwalzens der Platine hergestellt wird, **dadurch gekennzeichnet, dass** die Diffusionsschicht mittels der Verschweißung der Lagen von Grundmetall und Plattiermetall nach dem Sprengschweiß-Verfahren vor dem Warmwalzen der Platine ausgebildet ist.

10. Bimetallplatine nach Anspruch 9,
**dadurch gekennzeichnet,**
**dass** eine der Kanten der Plattierlage (2) mit einer Fase (3) versehen ist, wobei die Fase (3) mit einer eventuellen Eindringung in die Grundmetalllage (1) ausgebildet ist.

11. Bimetallplatine nach Anspruch 10,
**dadurch gekennzeichnet,**
**dass** die Fase (3) einer der Kanten der Plattierlage (2) mit einem Winkel α ≤ 60° ausgebildet ist.

12. Bimetallplatine nach Anspruch 9,
**dadurch gekennzeichnet,**
**dass** sie eine Schweißnaht (4) aufweist, welche über die gesamte Kontur der Lagenbindung des Grund- (1) und des Plattiermetalls (2) oder nur stellenweise ausgeführt ist.
